# FASCICULE DE BREVET EUROPEEN

(11) **EP 1 687 216 B1**
(45) Date de publication et mention de la délivrance du brevet: **23.03.2016**
(21) Numéro de dépôt: 04805533.9
(22) Date de dépôt: 24.11.2004
(51) Int. Cl.: B65D 35/24

(54) **TUBE SOUPLE MUNI D'UN COMPOSANT ELECTRONIQUE**
FLEXIBLES ROHR MIT EINEM ELEKTRONISCHEN BAUTEIL
FLEXIBLE TUBE COMPRISING AN ELECTRONIC COMPONENT

(30) Priorité: 28.11.2003 FR 0313999; 23.01.2004 FR 0400644
(43) Date de publication de la demande: 09.08.2006
(73) Titulaire: CEBAL S.A.S., 92230 Gennevilliers (FR)
(72) Inventeur: QUEMENEUR, Alan, F-51430 Tinqueux (FR)
(74) Mandataire: Gevers & Orès
(86) Numéro de dépôt international: PCT/FR2004/003004
(87) Numéro de publication internationale: WO 2005/058718

(56) Documents cités:
- EP-A- 0 697 342
- WO-A-01/34488
- DE-A- 10 218 417
- DE-U- 20 219 199
- US-A1- 2002 183 883
- US-B1- 6 482 287

## Description

### DOMAINE TECHNIQUE

L'invention concerne des tubes souples en matière plastique, plus particulièrement des tubes dont on souhaite effectuer un suivi logistique, pour eux-mêmes et/ou pour les produits qu'ils contiennent.

L'invention trouve une application avantageuse non seulement dans le suivi logistique de ces tubes avant leur livraison aux clients conditionneurs mais également dans le suivi des produits qu'ils contiennent, ces derniers ayant en général une plus grande valeur que les tubes et étant exposés de ce fait à des actes de contrefaçon.

### ETAT DE LA TECHNIQUE

Les tubes souples en matière plastiques peuvent déjà contenir une information introduite par le fabricant de tube souples au moment de la fabrication dudit tube. Ainsi, la demande JP2003-165552 (LION Corp.) divulgue un tube souple muni - à proximité de la soudure finale - d'un code-barre ou d'un décor représentant une marque enregistrée afin de détecter le nom du produit. L'information peut être si nécessaire discrète, par exemple en effectuant l'impression à l'aide d'encres thermochromiques ou "sécuritaires", seulement décelables sous l'effet d'un échauffement, d'un rayonnement ultra-violet, etc....

De telles techniques nécessitent la connaissance préalable des informations sur le produit au moment de la fabrication du tube. Il n'est donc pas possible de caractériser un produit destiné à être conditionné dans un tube standard, utilisable pour d'autres produits. Par exemple, si on veut effectuer un décor en employant des encres UV, on peut le faire au cours de la fabrication du tube, soit sur le web pour les tubes laminés, soit sur le corps cylindrique extrudé (tubes plastiques) avec les dispositifs d'impression classiques. Mais, une fois le tube rendu chez le client conditionneur, l'information ne peut plus être modifiée, à moins que celui-ci ne s'équipe de dispositifs d'impression coûteux. En pratique, il est donc difficile, voire impossible, de donner des informations supplémentaires, codées ou non, sur le tube une fois que celui-ci a été fabriqué et livré au conditionneur.

Une technique connue permettant de surmonter ce problème consiste à imprimer une étiquette contenant l'information voulue, codée ou non, et à la poser soit sur un suremballage qui regroupe les tubes souples livrés au conditionneur (par exemple pour le contrôle, des tubes), soit directement sur la jupe du tube souple (par exemple pour le suivi du produit contenu dans les tubes). Mais un problème important est soulevé par l'emploi d'une étiquette: on peut très facilement l'enlever et rompre ainsi le lien qui existait entre l'information qu'elle comporte et le produit qu'elle est censée accompagner.

La demande de brevet KR2003-025624 (ID TECK Co Ltd) divulgue un bouchon muni d'un circuit électronique sans contact qui permet, à l'aide de dispositifs de lecture et d'écriture à distance, d'empêcher la contrefaçon du produit contenu dans le récipient bouché par ce bouchon. Par son encombrement, un tel bouchon semble peu apte à boucher un tube souple de dimension standard (diamètre de jupe typiquement compris entre 15 et 60 mm, diamètre de goulot typiquement compris entre 5 et 15 mm). De plus, une fois le récipient ouvert, le bouchon peut facilement être perdu ou échangé. Ici encore, il y a risque de perte du lien entre l'information et le produit auquel elle est associée.

Le brevet EP 0 697 342 divulgue un tube souple muni d'un dispositif anti-vol, consistant en un élément passif perturbateur de champ intercalé entre les couches d'une structure multicouche insérée sur ledit tube souple (insert multicouche faisant transition entre la jupe et l'épaule, opercule multicouche, etc...).

La demande de brevet allemand DE 102 18 417 (TUBEX) divulgue un distributeur composé d'un tube souple surmonté d'une capsule-service montée de façon sensiblement irréversible sur la tête du tube, ledit distributeur étant muni d'un module électronique de type transpondeur ou bande magnétique placé, typiquement à l'aide d'un support faisant office d'étiquette, dans un endroit inaccessible de sa tête.

La demanderesse s'est donné pour objectif de proposer un dispositif technique permettant d'une part d'assurer le suivi de la production des tubes, d'autre part d'offrir aux clients-conditionneurs la possibilité de donner - après fabrication du tube - des informations fiables, codées ou non, sur le produit contenu dans lé tube, que celui-ci soit ou non muni d'une capsule-service et sans qu'il y ait risque de perdre lesdites informations tout au long de la vie du tube.

### OBJET DE L'INVENTION

Un premier objet de l'invention est une tête de tube souple en matière plastique comprenant un orifice de distribution délimité par un bord et une épaule reliant ledit bord à une jupe souple, ladite tête comporte, fixé dans la masse de la matière plastique constitutive de ladite tête, un module électronique destiné à échanger sans contact électrique des informations avec un dispositif de lecture ou de lecture/écriture extérieur audit tube, ledit module est disposé à un emplacement tel que ledit composant n'ait pas tendance à se déplacer ou se déformer au cours du moulage, de telle sorte qu'aucune matière adhesive ne se trouve au contact du produit conditionné.

Ledit composant électronique permet d'échanger des informations avec un dispositif extérieur comme ceux qui équipent par exemple les cartes à mémoire, en particulier les composants électroniques de type RFID (Radio Frequency Identification), dont nous allons détailler la description par la suite. Ces informations peuvent porter sur le tube lui-même ou sur le produit contenu dans le tube. Comme le composant est fixé dans la masse de la matière plastique constitutive de la tête, il peut être utilisé à un stade précoce de la fabrication et servir pour le suivi de la fabrication du tube, dès la réalisation de la tête, en indiquant par exemple les matières plastiques utilisées, la structure de jupe utilisée, la présence d'additifs particuliers dans la matière de la tête ou de la jupe, etc....

Une fois le tube réalisé et livré au conditionneur, le composant électronique peut être également utilisé pour permettre la traçabilité du produit conditionné (origine de ses composants, condition de fabrication, de stockage avant première ouverture, etc....)

On peut également penser à des composants électroniques autonomes par exemple munis d'une source d'énergie propre et susceptibles de remplir des fonctions déclenchées à partir d'une information résultant de données traitées par ce même composant. Par exemple, ce composant pourrait, à partir de la mesure programmée ou pilotée à distance d'un paramètre relatif au produit ou au conditionnement, déclencher l'affichage d'une information sur ledit produit ou ledit conditionnement sur la paroi extérieure de l'emballage, par exemple à l'aide d'un réactif coloré, ou encore d'un écran à diodes ou à cristaux liquides.

La tête de tube possède un orifice de distribution et une jupe, l'orifice de distribution étant délimité par un bord relié à ladite jupe par une épaule. Le dit bord peut-être porté par la paroi cylindrique d'un goulot destiné à accueillir un bouchon, ledit goulot étant relié à la jupe par une épaule de forme générale sensiblement conique. Mais, comme dans la demande WO02/08079, la tête de tube peut être démunie d'un goulot cylindrique, l'orifice de distribution étant placé par exemple sur la base d'une capsule surmontant ledit tube et reliée à une coiffe par une charnière. Dans un tel cas, ladite base relie le bord délimitant l'orifice à la jupe souple et joue également le rôle d'une épaule. Ladite tête de tube comprend ledit composant électronique, ce dernier étant avantageusement placé dans l'épaisseur de l'épaule.

De préférence, le bord de l'orifice et l'épaule sont, au moins sur une portion de leur épaisseur, réalisés en une seule pièce par moulage d'une même matière plastique et le composant électronique est fixé dans la masse de ladite matière plastique. Cela permet d'une part de réaliser une épaule avec continuité parfaite de matière entre la jupe et l'orifice de distribution dans toute ou partie de l'épaisseur de la dite épaule et d'autre part de simplifier la fabrication: on évite la réalisation d'une pièce intermédiaire contenant le composant, son transfert, son assemblage puis son soudage au reste du tube.

Un système RFID comprend d'une part un émetteur-récepteur - qui contrôle le système d'acquisition et de communication des données - relié à une antenne et d'autre part un composant RFID qui consiste en un transpondeur relié à une antenne. Le transpondeur est une étiquette d'identification par radiofréquence programmée électroniquement pour émettre automatiquement un signal en réponse au signal d'interrogation qu'il reçoit. L'antenne du composant RFID est un conducteur relié à l'étiquette. Elle reçoit des signaux radio qui activent le transpondeur pour y écrire ou lire des données L'antenne peut se présenter sous une grande variétés de forme. En général, elle se présente sous la forme de spires sérigraphiées avec une encre conductrice sur un support en matière plastique (typiquement une résine époxy ou un polyester saturé, par exemple du polybutylène téréphtalate), sur lequel est également fixé le transpondeur. Les spires peuvent être de forme globalement circulaire ou polygonale, typiquement carrée ou rectangulaire. Dans ce dernier cas, lorsque la longueur est notablement supérieure à la largeur, l'antenne prend une forme globale longiligne: nous l'appellerons par la suite "antenne linéaire" ou "antenne longiligne". Les raccords entre le transpondeur et les branches de l'antenne sont en général protégés par une couche d'une matière plastique, en général une résine époxy, formant une surépaisseur.

Ledit composant électronique est placé au.niveau de l'épaule du tube, dans la masse de la matière plastique constitutive de la tête de façon à éviter le contact de l'antenne et de l'étiquette avec le produit que le tube est destiné à contenir. Il est fixé dans la masse, sans faire appel à des matières adhésives, au cours du moulage par injection de la tête. Les conditions de mise en place du composant dans la cavité du moule d'injection dépendent de la forme d'antenne choisie. Certaines d'entre elles sont décrites dans les exemples présentés ci-après.

Un autre objet de l'invention est un procédé de fabrication de têtes de tubes souples comprenant un module électronique apte à échanger sans contact électrique des informations avec un dispositif de lecture ou de lecture/écriture, typiquement un composant électronique de type RFID, caractérisé en ce qu'on place ledit composant électronique (appelé ci-après également "puce") à l'intérieur de la cavité du moule destiné à réaliser ladite tête ledit composant électronique étant configuré pour et étant déposé dans la cavité du moule destinée à réaliser ladite tête sans être maintenu par une quelconque matière adhesive, à un emplacement tel que ledit composant n'ait pas tendance à se déplacer ou se déformer au cours du moulage puis en ce qu'on moule ladite tête, la matière plastique s'écoulant de telle sorte qu'elle emprisonne la puce, rendant ainsi indissociable l'ensemble tête et puce.

De préférence, on effectuera un moulage par injection de matière plastique dans ladite cavité du moule. Un moulage par compression peut également être effectué si les composants électroniques utilisés sont suffisamment solides pour pouvoir résister aux sollicitations mécaniques engendrées par ce type de mise en forme. Que le moulage se fasse par injection ou par compression, le composant est déposé dans la cavité du moule destiné à réaliser ladite tête. Ce dernier comprend au moins deux parties mobiles l'une par rapport à l'autre: la matrice, dont l'empreinte définit la surface extérieure de l'épaule et du goulot, et le poinçon, dont la tête définit la surface intérieure de l'épaule et du goulot. Très souvent, le goulot doit présenter un filet de vissage sur sa paroi extérieure, ce qui impose d'utiliser une matrice elle-même en plusieurs parties mobiles qui s'éloignent les unes des autres - par exemple à l'aide de déplacements radiaux- pour faciliter le démoulage de la partie filetée.

Pour éviter tout risque d'incompatibilité chimique avec le produit destiné à être conditionné par le tube, ce composant est fixé sans l'àide d'adhésif. Il est nécessaire dans ce cas de trouver une configuration géométrique de puce et un emplacement dans la cavité de moulage tels que ladite puce n'ait pas tendance à se déplacer ou se déformer au cours du moulage. Les exemples donnés ci-après montrent deux modes de réalisation où le composant électronique supporte l'opération de moulage par injection de matière plastique sans déplacement ni déformation sensibles

De préférence, on déposé ledit composant électronique sur la surface conique convexe de la tête du poinçon, le dispositif de moulage étant disposé de telle sorte que le poinçon se trouve sous la matrice. Le composant électronique peut être ainsi amené au-dessus de la tête de poinçon et déposé par simple gravité.

La matière plastique utilisée pour le moulage de la tête est la matière plastique habituellement employée, à savoir typiquement du polyéthylène haute-densité, basse-densité ou moyenne densité. Le moulage par injection se fait de préférence à une température comprise entre 240 et 250°C.

De façon à ce que le composant ne soit pas en contact ni avec l'extérieur, ni avec l'intérieur du tube, on choisit un composant d'épaisseur totale (support + surépaisseur formée par la couche protectrice des soudures) inférieure à 400 microns. De la sorte, il n'est pas nécessaire de modifier l'épaisseur habituelle de l'épaule d'un tube souple standard.

Les composants électroniques proposés couramment dans le commerce sont réalisés avec des supports en résine thermodurcissable, de type époxy. Ils peuvent avoir toutes les dimensions possibles. Si les contraintes relatives à la portée de la réception des informations ne sont pas trop contraignantes, on peut utiliser directement des composants de faible encombrement du commerce, qui se trouveront "noyés" dans la masse de la matière plastique injectée. Toutefois, le positionnement précis de tels composants électroniques de faible encombrement peut poser problème puisqu'il faut éviter l'emploi de matières adhésives, permettant par exemple de fixer le composant en un endroit précis du moule.

C'est pourquoi, il est apparu avantageux de choisir des composants de plus fort encombrement, bénéficiant de ce fait d'une meilleure portée de réception des fréquences. Ces composants électroniques doivent avoir un support capable de résister aux sollicitations mécaniques et thermiques engendrées par la matière plastique en fusion au cours du moulage. La fixation du composant dans la matière plastique de la tête peut être purement mécanique: on cherchera seulement à enchâsser la périphérie du support dans la matière plastique surmoulée autour dudit composant. La fixation du composant électronique peut être également réalisée par soudure, auquel cas on utilisera un support constitué au moins partiellement d'un matériau compatible en fusion avec la matière plastique de la tête. typiquement un polyéthylène haute densité ou un polypropylène. Un tel matériau peut recouvrir ledit support sous forme d'une couche extérieure. Cette couche extérieure peut recouvrir la partie antenne obtenue par sérigraphie. Elle peut également recouvrir l'autre face du support. De préférence, le composant est mis en place dans l'empreinte de l'un des outillages de moulage, ladite couche extérieure en une matière plastique compatible en fusion avec la matière plastique de la tête étant placée au contact de la surface gravée de l'empreinte de l'outillage de moulage. De la sorte la couche extérieure se trouve après moulage au contact du produit contenu à l'intérieur du tube souple et offre une barrière protectrice au composant électronique.

Dans une modalité préférée, le composant électronique possède un support avec une face en matière thermoplastique et l'autre face, recouverte de l'antenne et également recouverte - en dehors de sa périphérie - d'une matière adhésive lui permettant d'adhérer sur une bande de distribution. Ainsi, avant moulage, le composant est amené par défilement de la bande vers le moule, puis il est détaché par simple pelage de la bande au droit de la cavité de moulage, et descend - par gravité ou à l'aide d'une ventouse par exemple - dans la gravure du moule, la face en matière thermoplastique reposant sur la surface gravée du moule. Lors du moulage, la matière plastique en fusion recouvre la face qui comporte l'antenne et la couche adhésive: comme la périphérie dudit composant n'est pas recouverte de ladite matière adhésive, celui-ci se trouve enchâssé dans la tête, intimement lié avec la matière plastique de la tête.

Pour assurer une mise en place précise et répétable dudit composant dans le moule, sans recourir à l'emploi de matières adhésives, on choisit avantageusement un composant électronique sur un support en forme de disque troué en son centre que l'on dispose autour de la protubérance du poinçon qui sert à mettre en forme l'intérieur du goulot.

Une autre possibilité, notamment lorsque le composant électronique n'a pas la forme d'un disque troué en son centre (il peut par exemple prendre la forme d'un arc qui s'étend sur 90°, 120° ou 180°), consiste à graver une encoche torique, d'étendue angulaire légèrement supérieure à celle du composant, sur la partie supérieure du poinçon. De la sorte, l'encoche sert de logement qui guide et facilite la dépose puis aide au maintien du composant avant le rapprochement de la matrice préalable à l'opération de moulage. Au cours du moulage proprement dit, l'empreinte constituée par l'encoche facilite l'écoulement de la matière plastique sous le support du composant, ce qui assure l'emprisonnement de sa périphérie.

Un autre objet de l'invention est un tube souple comprenant une tête et une jupe souple, caractérisé en que la tête comporte, de préférence au niveau de l'épaule, un module électronique apte à échanger sans contact électrique des informations avec un dispositif de lecture ou de lecture/écriture, typiquement un composant électronique de type RFID (Radio Frequency Identification).

La tête est soudée à la jupe soit après avoir été moulée, soit au cours du moulage. Dans ce dernier cas, on dit que la tête est surmoulée sur la jupe: l'apport calorifique provenant de la matière plastique injectée est suffisant pour fondre la matière plastique de l'extrémité de la jupe qui est destinée à être fixée à ladite tête.

Pour surmouler la tête de tube sur une jupe, on emmanche ladite jupe autour de la partie du moule appelée poinçon, en l'enfonçant de telle sorte qu'une extrémité de la jupe déborde et soit emprisonnée dans la cavité de moulage délimitée par la tête du poinçon et l'empreinte de la matrice. La matière plastique - sous l'effet de l'injection ou sous celui de la compression - vient au contact de l'extrémité de la jupe. Se trouvant à une température supérieure à leurs points de ramollissement Vicat respectifs, les matières plastiques de la tête et de la jupe se soudent intimement entre elles sans autre apport de chaleur ou de matière. Après un léger maintien sous pression (de l'ordre de quelques secondes) et refroidissement, la tête est moulée dans les dimensions voulues et soudée fermement à la jupe.

Un autre objet de l'invention est un procédé pour fabriquer un tube souple muni d'une tête de tube dans lequel la tête est surmoulée sur l'extrémité de la jupe, caractérisé en ce qu'un module électronique apte à échanger sans contact électrique des informations avec un dispositif de lecture ou de lecture/écriture, typiquement un composant électronique de type RFID est placé sur la tête du poinçon, en appui contre l'extrémité de jupe qui déborde dans la cavité de moulage.

Dans cette modalité de l'invention, on utilise l'extrémité débordante de la jupe pour "caler" ledit composant électronique comportant un transpondeur et une antenne: celui-ci est placé sur la tête du poinçon, en butée contre l'extrémité de la jupe. Le composant électronique peut être une puce sur un support type epoxy assez lourd et rigide, de sorte que l'alimentation en puces peut se faire par simple empilage: un moule est amené au droit de la pile, la puce à la base de la pile est détachée et tombe par gravité dans la cavité de moulage puis vient buter contre l'extrémité de la jupe. On peut choisir également une antenne linéaire, de préférence sur support en matière thermoplastique. La puce est mise en place par un dispositif de préhension automatisé. Elle est suffisamment souple pour suivre, au moment de sa mise en place, la courbure imposée par l'extrémité de jupe. De préférence encore, on choisit une antenne linéaire aussi longue que possible (de longueur au moins égale à la moitié du diamètre) pour diminuer les efforts et déplacements engendrés lors de l'arrivée de la matière plastique en fusion. La portée de détection de l'antenne peut être ajustée si nécessaire en augmentant le nombre de spires.
La figure 1 illustre une bande utilisée pour déposer en grande cadence des puces longilignes dans la cavité d'un dispositif permettant de mouler des têtes de tubes.
La figure 2 illustre une coupe axiale d'une partie de ce dispositif de moulage: le mandrin est muni d'une jupe avant moulage de la tête et une puce longiligne a été déposée sur la tête du mandrin.
La figure 3 illustre une vue axonométrique - comprenant une coupe diamétrale partielle - de la tête du tube surmoulée sur la jupe et comprenant la puce longiligne dans l'épaisseur de l'épaule.
La figure 4 illustre une bande utilisée pour déposer en grande cadence des puces en forme de disque troué dans la cavité d'un dispositif permettant de mouler des têtes de tubes.
La figure 5 illustre une coupe axiale de ce dispositif de moulage: le mandrin est muni d'une jupe avant moulage de la tête et une puce en forme de disque troué de a été déposée sur la surface conique convexe de la tête du mandrin.
La figure 6 illustre une coupe axiale de la tête du tube surmoulée sur la jupe et comprenant la puce en forme de disque troué dans l'épaisseur de l'épaule.

### DESCRIPTION DETAILLEE DE L'INVENTION

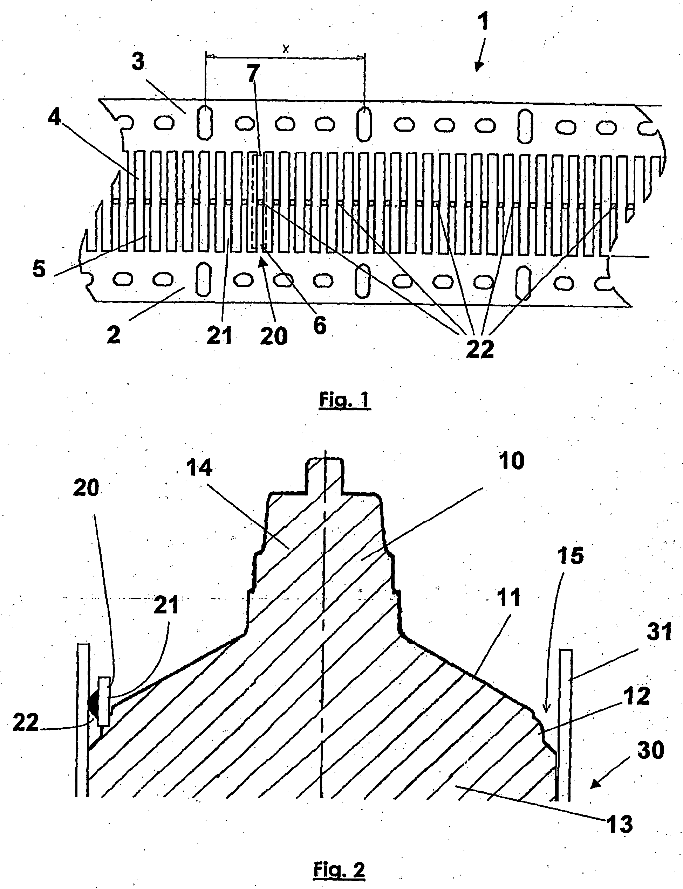

### EXEMPLE 1 - Tête de tube surmoulée sur une jupe et munie d'un composant électronique longiligne (Figures 1 à 3)

Dans cet exemple, on utilise avantageusement la configuration géométrique particulière imposée par le surmoulage de la tête sur la jupe et pour lequel l'extrémité de la jupe doit déborder dans la cavité du moule. On utilise cette extrémité débordante de jupe comme butée servant d'appui à la puce.

La figure 1 illustre une bande **1** utilisée pour alimenter le dispositif de moulage en puces longilignes. La bande est en polyéthylène haute densité. Ses bords **2** et **3** sont perforés pour faciliter une avance régulière. Sa partie centrale est munie d'un grand nombre de perforations rectangulaires **4** séparant des ligaments **5** sur lesquels ont été imprimés par sérigraphie des antennes longilignes, et au milieu desquels ont été déposés des transpondeurs. Les transpondeurs sont reliés aux antennes par des soudures protégées par des protubérances **22.** Une fois découpé au niveau de ses deux extrémités **6** et **7,** le ligament devient un composant électronique longiligne **20** avec un support **21** et un transpondeur protégé légèrement par un relief **22.** La libération des contraintes résiduelles résultant de la découpe fait que le composant électronique longiligne **20** acquiert spontanément une certaine courbure qui facilite sa mise en place dans la cavité du moule. Typiquement, on choisit pour la puce longiligne une longueur comprise entre le quart et les trois quarts du périmètre de la jupe, de préférence entre 40 et 60%.

La figure 2 illustre une coupe axiale du mandrin **10** sur lequel a été déposée la puce longiligne **20.** Le mandrin possède un corps cylindrique **13** autour duquel est emmanchée la jupe **30** et une tête comprenant une protubérance **14** servant à définir la surface interne du goulot et une paroi conique convexe **11** servant à définir la surface interne de l'épaule du tube. La puce longiligne **20** est déposée à proximité de l'épaulement périphérique **12** qui, avec l'extrémité débordante **31** de la jupe définit une gorge annulaire **15.** Cet épaulement périphérique **12** correspond à la surépaisseur existant au niveau de la jonction entre la tête et la jupe. La puce longiligne **20** arrive en butée contre la paroi interne de la jupe. Au cours de l'injection, elle vient se plaquer sur toute sa longueur contre l'extrémité débordante de la jupe avant que celle-ci ne ramollisse en raison de échauffement.

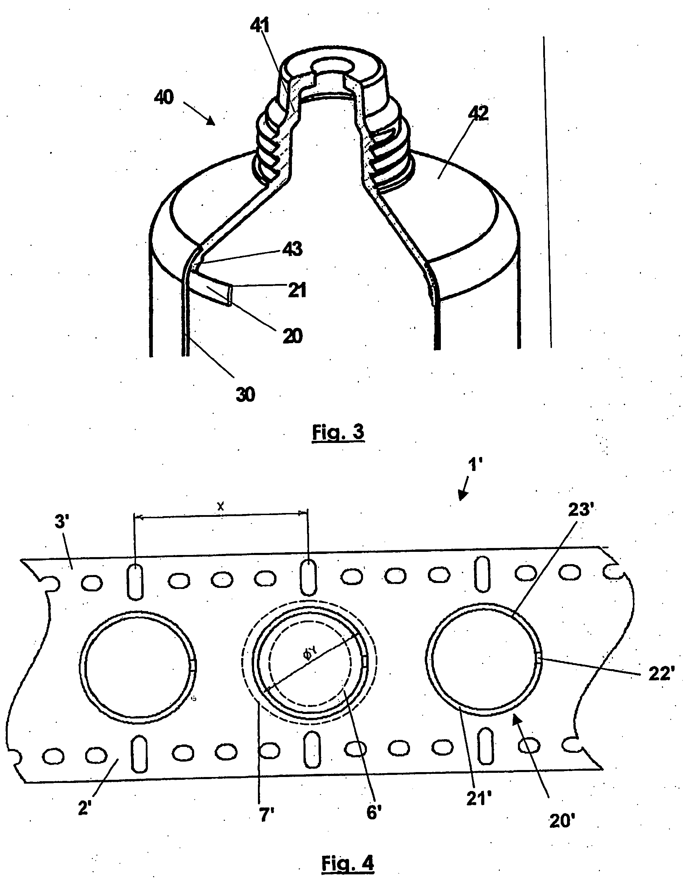

La figure 3 illustre une vue axonométrique - comprenant une coupe diamétrale partielle - de la tête **40** du tube. Elle présente un goulot **41** et une épaule 42 reliant ledit goulot à la jupe **30.** Au niveau de la surépaisseur correspondant à la jonction entre la tête et la jupe , on peut trouver la puce longiligne **20** située dans l'épaisseur de l'épaule.

### EXEMPLE 2 - Tête de tube munie d'un composant électronique en forme de disque troué

Dans cet exemple, la tête peut indifféremment être moulée séparément ou surmoulée sur la jupe.

La figure 4 illustre une bande **1'** utilisée pour alimenter le dispositif de moulage en puces en forme de disque troué. La bande est en polyéthylène haute densité. Ses bords **2'** et **3'** sont perforés pour faciliter une avance régulière. Sa partie centrale est munie d'un grand nombre d'antennes **23'** de forme globalement circulaire imprimées par sérigraphie, et reliées à des transpondeurs. La bande **1'** est découpée suivant deux circonférences **6'** et **7'** entourant l'antenne circulaire. Le composant électronique **20'** en forme de disque troué ainsi obtenu a un support **21'** sur lequel l'antenne **23'** est imprimée et qui comprend un transpondeur relié lui-même à l'antenne par l'intermédiaire de soudures protégées par un relief **22'.**

Pour avoir des puces utilisables quelles que soient la dimension et la forme du tube (jupe cylindrique circulaire, elliptique, polygonale, etc...), le diamètre de la circonférence de découpe intérieure est choisi de telle sorte qu'il est supérieur au plus grand des diamètres standards de l'orifice de distribution et le diamètre de la circonférence de découpe extérieure est choisi de telle sorte qu'il est inférieur au plus petit des diamètres inscrits standards des jupes souples. De préférence également, on place le transpondeur et son relief protecteur **22'** plus près de la circonférence de découpe intérieure **6'** si le relief est situé vers le haut et inversement plus près de la circonférence de découpe extérieure **7'** si le relief est situé vers le bas. De la sorte, le relief protecteur **22'** de la soudure, n'étant pas continuellement au contact de la paroi de l'outillage au cours du moulage, est préservé des sollicitations mécaniques engendrées au cours du rapprochement mutuel des deux parties de l'outillage.

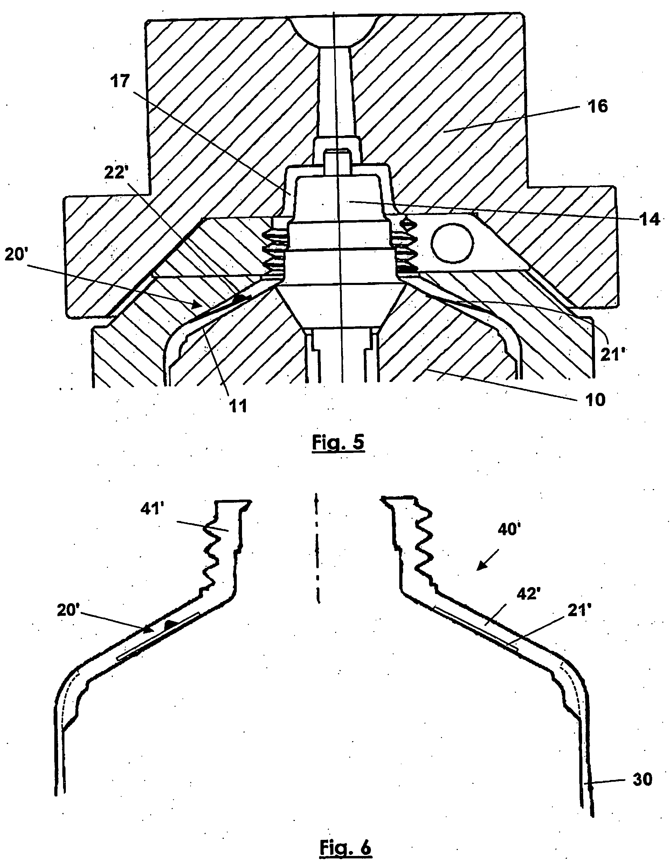

La figure 5 illustre une coupe axiale du moule, comprenant le mandrin **10** et la matrice **16.** La puce en forme de disque troué **20'** a été déposée autour de la protubérance **14,** sur la face tronconique convexe **11** de la tête du mandrin **10.** On peut remarquer qu'après le rapprochement de la matrice et du poinçon pour former la cavité de moulage **17,** le composant doit, pour tenir à l'intérieur de ladite cavité, prendre une forme tronconique. Cette transformation peut se traduire par un rétreint de la partie proche du diamètre et une expansion de la partie proche du diamètre externe. Avec un support particulièrement rigide, une couche épaisse en résine époxy ou même, comme dans le cas présent, un support assez épais en polyéthylène haute densité, il est avantageux de ménager des fentes radiales au moins dans la zone proche du diamètre interne pour permettre aux parties ainsi isolées les unes des autres de se déplacer librement, quitte à se chevaucher partiellement au cours du rétreint. Si, comme dans la variante 1 exposée ci-après, le support reste mince et flexible, la mise en forme de tronc de cône peut s'effectuer sans dommage: des ondulations sont certes crées mais restent noyées dans la masse de la matière plastique de la tête.

La figure 6 illustre une coupe axiale de la tête du tube **40'** surmoulée sur la jupe. Elle présente un goulot **41'** et une épaule **42'** reliant ledit goulot à la jupe **30.** On peut trouver la puce en forme de disque troué **20'** piégée dans l'épaisseur de l'épaule.

### Variante 1 de l'exemple 2:

Cette variante concerne un mode de fabrication légèrement différent du précédent.

Au lieu d'utiliser la bande de la figure 4, on utilise une bande de distribution sur laquelle les composants, déjà réalisés et découpés à la bonne dimension, sont collés grâce une couche adhésive facilitant leur détachement par simple pelage. Dans ce cas, le support peut être plus mince et en un matériau encore plus souple (polyéthylène basse densité par exemple). La face qui supporte l'antenne est recouverte de ladite matière adhésive mais en dehors de sa périphérie. Ainsi, avant moulage, le composant est amené par défilement de la bande de distribution vers le moule, puis il est détaché par simple pelage de la bande au droit de la cavité de moulage, et descend - par gravité ou à l'aide d'une ventouse par exemple - dans la gravure du moule, la face en matière thermoplastique reposant sur la surface gravée du moule. Lors du moulage, la matière plastique en fusion recouvre la face qui comporte l'antenne et la couche adhésive: comme la périphérie dudit composant n'est pas recouverte de ladite matière adhésive, celui-ci se trouve enchâssé dans la tête, intimement lié avec la matière plastique de la tête.

### Variante 2 de l'exemple 2:

Cette autre variante concerne également un autre mode de fabrication, différent des précédents.

Au lieu d'utiliser les composants décrits à la figure 4 ou dans la première variante, on utilise des composants ou des inserts devant pour d'autres raison être introduits dans la tête de tube: ainsi, par exemple, les inserts en monoblocs en PBT (polybutylène téréphtalate) ou en matériaux multicouches thermoformés qui sont déposés au niveau des épaules pour diminuer la perméabilité de la tête vis-à-vis de l'oxygène et de la vapeur d'eau. Par exemple, un multicouche barrière, tel que celui décrit dans EP-B-0 524 897, peut servir de support au composant électronique: on imprime l'antenne par sérigraphie sur la face opposée à celle destinée à être exposée à l'intérieur du tube, l'impression se faisant de préférence dans la zone destinée à rester dans l'épaule, on y dépose le transpondeur et on effectue les soudures reliant le transpondeur à l'antenne. On réalise ensuite l'insert par thermoformage.

Une fois fabriqués, les inserts-puces sont regroupés et empilés. De la sorte, l'alimentation en inserts-puces du dispositif de moulage des têtes de tubes peut se faire de la même manière que pour les inserts barrière: un moule est amené au droit de la pile d'inserts, l'insert situé à la base de la pile est détaché et tombe par gravité dans la cavité de moulage. Cette technique est déjà bien connue et appliquée pour les inserts barrières introduits dans les têtes des tubes pour pâte dentifrice.

### AVANTAGES

Le procédé de fabrication intègre l'insertion du composant électronique dans les étapes à grande cadences: il n'y a pas nécessité d'effectuer l'ajout des puces en reprise. L'insertion se fait à une cadence compatible avec les cadences industrielles, les dispositifs de dépose d'inserts existant déjà, par exemple pour déposer les inserts barrières dans les tubes pour pâte dentifrice.

La puce est immergée dans la masse de la matière plastique constitutive de la tête du tube: le composant peut être parfaitement discret et il n'y a pas de problème d'incompatibilité avec le produit à conditionner.

## Revendications

1. Tête de tube souple (40,40') comprenant un orifice délimité par un bord (41,41') et une épaule (42,42') reliant ledit bord à la jupe souple (30) du tube, ledit tube souple étant destiné à conditionner un produit, ladite tête comportant un module électronique (20, 20') destiné à échanger sans contact électrique des informations sur le tube et/ou son contenu avec un dispositif de lecture ou de lecture/écriture extérieur audit tube, **caractérisée en ce que** ledit module électronique est disposé et fixé dans la masse de la matière plastique constitutive de ladite tête à un emplacement tel que ledit composant n'ait pas tendance à se déplacer ou se déformer au cours du moulage, de telle sorte qu'aucune matière adhésive ne se trouve au contact du produit conditionné.

2. Tête de tube selon la revendication 1 dans laquelle ledit composant électronique est disposé entre l'extrémité (31) de la jupe et de ladite épaule de la tête du tube, dans la masse de la matière plastique constitutive de la tête.

3. Tête de tube selon la revendication 1, dans laquelle ledit composant électronique (20') a un support présentant une forme de disque troué en son centre, le disque étant disposé autour de l'épaule et noyé dans l'épaisseur de celle-ci

4. Tête de tube selon l'une quelconque des revendications 1 à 3 dans laquelle ledit composant électronique a une épaisseur totale inférieure à 400 microns.

5. Tête de tube selon l'une quelconque des revendications 1 à 4, dans laquelle la périphérie du support (21, 21') dudit composant est enchâssée par la matière plastique de la tête.

6. Tête de tube selon l'une quelconque des revendications 1 à 7 dans laquelle le support (21, 21') dudit composant est constitué au moins partiellement d'un matériau compatible en fusion avec la matière plastique de la tête.

7. Tête de tube selon la revendication 6 dans laquelle le support dudit composant est en polyéthylène ou en polypropylène.

8. Tête de tube selon la revendication 6 ou 7 dans laquelle ledit matériau compatible en fusion avec la matière plastique de la tête se présente sous la forme d'une couche extérieure qui fait partie de la paroi interne de l'épaule du tube.

9. Procédé de fabrication de têtes de tubes souples comprenant un module électronique (20, 20') apte à échanger sans contact électrique des informations avec un dispositif de lecture ou de lecture / écriture, typiquement un composant électronique de type RFID, **caractérisé en ce qu'**on place ledit composant électronique à l'intérieur de la cavité (17) du moule destinée à réaliser ladite tête, ledit composant électronique étant configuré pour et étant déposé dans la cavité du moule destinée à réaliser ladite tête sans être maintenu par une quelconque matière adhésive, à un emplacement tel que ledit composant n'ait pas tendance à se déplacer ou se déformer au cours du moulage, puis **en ce qu'**on moule ladite tête, la matière plastique s'écoulant de telle sorte qu'elle emprisonne ledit composant électronique, rendant ainsi l'ensemble indissociable.

10. Procédé de fabrication de têtes de tubes souples selon la revendication 9 dans lequel on effectue, le moulage de la tête par injection.

11. Procédé de fabrication de têtes de tubes souples selon l'une quelconque des revendications 9 à 10 dans lequel on dépose ledit composant électronique sur la surface conique convexe (11) de la tête du poinçon (10), le dispositif de moulage étant disposé de telle sorte que le poinçon (10) se trouve sous la matrice (16).

12. Procédé de fabrication de têtes de tubes souples selon l'une quelconque des revendications 9 à 11, dans lequel ledit composant électronique (20, 20') possède un support (21,21') comportant une couche extérieure en une matière plastique compatible en fusion avec la matière plastique de la tête et dans lequel ledit composant électronique est posé sur la surface conique convexe (11) de la tête du poinçon (10) en présentant ladite couche extérieure face à ladite surface conique convexe du poinçon.

13. Procédé de fabrication de têtes de tubes souples selon l'une quelconque des revendications 9 à 12, dans lequel ledit composant électronique (20') a un support présentant une forme de disque troué en son centre et en ce que l'on dispose ledit composant électronique autour de la protubérance (14) du poinçon qui sert à mettre en forme l'intérieur du bord.

14. Tube souple comprenant une tête et une jupe souple, caractérisé en que la tête est une tête de tube selon l'une quelconque des revendications 1 à 8.

15. Procédé pour fabriquer un tube souple muni d'une tête (40) et d'une jupe (30) dans lequel ladite tête est surmoulée sur l'extrémité (31) de ladite jupe, ladite jupe étant emmanchée autour de la partie du moule appelée poinçon, enfoncée de telle sorte qu'une extrémité (31) de la jupe déborde et se trouve emprisonnée dans la cavité d moulage (17) délimitée par la tête du poinçon (10) et l'empreinte de la matrice (16), **caractérisé en ce qu'**un module électronique (20), apte à échanger sans contact électrique des informations avec un dispositif de lecture ou de lecture / écriture, typiquement un composant électronique de type RFID, est placé sur la tête (11) du poinçon (10), en appui contre l'extrémité (31) de la jupe (30) qui déborde dans la cavité de moulage (17).

## Patentansprüche

1. Elastischer Rohrkopf (40, 40'), umfassend eine Öffnung, die durch einen Rand (41, 41') und einen Ansatz (42, 42') begrenzt ist, wobei das genannte elastische Rohr den genannten Rand mit der elastischen Schütze (30) des Rohrs verbindet, wobei das genannte elastische Rohr zur Verpackung eines Produkts bestimmt ist, wobei der genannte Kopf ein elektronisches Modul (20, 20') umfasst, das zum Austausch von Informationen ohne elektrischen Kontakt auf dem Rohr und / oder seinem Inhalt mit einer Lesevorrichtung oder einer Lese- / Schreibvorrichtung außerhalb des genannten Rohrs bestimmt ist, **dadurch gekennzeichnet, dass** das genannte elektronische Modul in der Masse des den genannten Kopf bildenden Kunststoffs an einer Stelle derart angeordnet und befestigt ist, dass das genannte Bauteil nicht dazu neigt, sich im Verlauf des Abformens zu verschieben oder zu verformen, derart, dass sich kein anhaftendes Material im Kontakt mit dem verpackten Produkt befinden kann.

2. Rohrkopf gemäß Anspruch 1, bei dem das genannte elektronische Bauteil zwischen dem Ende (31) der Schürze und dem genannten Ansatz des Kopfes des Rohrs in der Masse des den Kopf bildenden Kunststoffs angeordnet ist.

3. Rohrkopf gemäß Anspruch 1, bei dem das genannte elektronische Bauteil (20') einen Träger hat, der eine in ihrem Zentrum durchlöcherte Scheibenform hat, wobei die Scheibe um den Ansatz angeordnet und in der Dicke desselben versenkt ist.

4. Rohrkopf gemäß einem der Ansprüche 1 bis 3, bei dem das genannte elektronische Bauteil eine Gesamtdicke von weniger als 400 Mikron hat.

5. Rohrkopf gemäß Anspruch 1 bis 4, bei dem die Peripherie des Trägers (21, 21') des genannten Bauteils durch das Plastikmaterial des Kopfes eingefasst ist.

6. Rohrkopf gemäß Anspruch 1 bis 7, bei dem der Träger (21, 21') des genannten Bauteils wenigstens teilweise aus einem in Verschmelzung mit dem Kunststoff des Kopfes kompatiblen Material ausgebildet ist.

7. Rohrkopf gemäß Anspruch 6, bei dem der Träger des genannten Bauteils aus Polyethylen oder aus Polypropylen ist.

8. Rohrkopf gemäß Anspruch 6 oder 7, bei dem das genannte in Verschmelzung mit dem Kunststoff des Kopfes kompatible Material die Form einer äußeren Schicht aufweist, die Bestandteil der inneren Wand des Ansatzes des Rohrs ist.

9. Herstellungsverfahren von elastischen Rohrköpfen, umfassend ein elektronisches Modul (20, 20'), das geeignet ist, ohne elektrischen Kontakt Informationen mit einer Lese- oder Lese- / Schreibvorrichtung auszutauschen, typischerweise ein elektrisches Bauteil vom Typ RFID, **dadurch gekennzeichnet, dass** das genannte elektronische Bauteil im Innern der Ausnehmung (17) der Form angeordnet wird, die zur Realisierung des genannten Kopfes bestimmt ist, wobei das elektronische Bauteil konfiguriert ist, um in der Ausnehmung der zur Realisierung des genannten Kopfes bestimmten Form, ohne durch irgendein anhaftendes Material festgehalten zu werden, an einer Stelle derart abgelegt zu werden, dass das genannte Bauteil nicht dazu neigt, sich im Verlauf des Abformens zu verschieben oder zu verformen, dann, dass der genannte Kopf abgeformt wird, wobei der Kunststoff derart abläuft, dass er das genannte elektronische Bauteil einschließt und somit die Gruppe untrennbar macht.

10. Herstellungsverfahren von elastischen Rohrköpfen gemäß Anspruch 9, bei dem das Abformen des Kopfes per Einspritzen erfolgt.

11. Herstellungsverfahren von elastischen Rohrköpfen gemäß einem der Ansprüche 9 bis 10, bei dem das genannte elektronische Bauteil auf der konischen, konvexen Oberfläche (11) des Kopfes des Stempels (10) abgelegt wird, wobei die Abformvorrichtung derart abgelegt wird, dass sich der Stempel (10) unter der Matrix (16) befindet.

12. Herstellungsverfahren von elastischen Rohrköpfen gemäß einem der Ansprüche 9 bis 11, bei dem das genannte elektronische Bauteil (20, 20') einen Träger (21, 21') besitzt, der eine äußere Schicht aus einem in Fusion mit dem Kunststoff des Kopfes kompatiblen Kunststoff umfasst und bei dem das genannte elektronische Bauteil auf der konischen, konvexen Oberfläche (11) des Kopfes des Stempels (10) aufgebracht ist und dabei die genannte äußere Schicht gegenüber der genannten konischen, konvexen Oberfläche des Stempels präsentiert.

13. Herstellungsverfahren von elastischen Rohrköpfen gemäß einem der Ansprüche 9 bis 12, bei dem das genannte elektronische Bauteil (20') einen Träger hat, der eine in ihrem Zentrum durchlöcherte Scheibenform hat und dass das genannte elektronische Bauteil um die Protuberanz (14) des Stempels angeordnet wird, die zur Formbildung des Inneren des Randes dient.

14. Elastisches Rohr, umfassend einen Kopf und eine elastische Schütze, **dadurch gekennzeichnet, dass** der Kopf ein Rohrkopf gemäß einem der Ansprüche 1 bis 8 ist.

15. Verfahren zur Herstellung eines elastischen Rohrs, das mit einem Kopf (40) und einer Schürze (30) versehen ist, bei dem der Kopf am Ende (31) der genannten Schürze abgeformt ist, wobei die genannte Schürze um den Teil der als Stempel bezeichneten Form eingepasst ist, der derart eingedrückt ist, dass ein Ende (31) der Schürze übersteht und in der Abformausnehmung (17) gefangen ist, die durch den Kopf des Stempels (10) und den Abdruck der Matrix (16) begrenzt ist, **dadurch gekennzeichnet, dass** ein elektronisches Modul (20), das geeignet ist, ohne elektrischen Kontakt Informationen mit einer Lese- oder Lese- / Schreibvorrichtung auszutauschen, typischerweise ein elektronisches Bauteil vom Typ RFID, auf dem Kopf (11) des Stempels (10) aufstützend gegen das Ende (31) der Schürze (30) angeordnet ist, das in der Abformausnehmung (17) übersteht.

## Claims

1. Flexible tube head (40, 40') having an orifice whose forms an edge (41, 41') and a shoulder (42, 42') connecting said edge to the flexible skirt (30) of the tube, said flexible tube being designed to pack a product, said head including an electronic module (20, 20') designed to exchange without any electrical contact information about the tube and/or its contents with an external reading or reading/writing device outside said tube, **characterized in that** said electronic module is arranged and secured in the mass of the plastic material forming said head in such a location that said component has no tendency to move or become deformed during molding, in such a way that no adhesive material comes into contact with the packed product.

2. Tube head according to claim 1 in which said electronic component is arranged between end (31) of the skirt and said shoulder of the tube head, in the mass of plastic material forming the head.

3. Tube head according to claim 1, in which said electronic component (20') has a disc-shaped support pierced at the center, with the disc arranged around the shoulder and embedded in its thickness.

4. Tube head according to any of claims 1 to 3 in which said electronic component has a total thickness of less than 400 microns.

5. Tube head according to one of claims 1 to 4, in which the perimeter of support (21, 21') of said component is embedded in the plastic material of the head.

6. Tube head according to any one of claims 1 to 7, in which support (21, 21') of said component consists at least partially of compatible material fusing with the plastic material of the head.

7. Tube head according to claim 6 in which the support of said component is of polyethylene or polypropylene.

8. Tube head according to claim 6 or 7 in which said compatible material fused with the plastic material of the head consists of an external layer which is part of the inside wall of the tube shoulder.

9. Method of manufacturing flexible tube heads comprising an electronic module (20, 20'), capable of exchanging, without electrical contact, information with a reading or reading/writing device, typically an electronic component of the RFID type, **characterized in that** said electronic component is placed inside cavity (17) of the mold designed to produce said head, with said electronic component configured for and being placed in the cavity of the mold designed for producing the said head without being maintained by any adhesive material whatsoever, in a location wherein said electronic component has no tendency to move or become deformed during molding, then **in that** said head is molded, with the plastic material flowing in such a way that it renders captive said electronic component, thus making the assembly inseparable.

10. Method of manufacturing flexible tube heads according to claim 9 in which the head is molded by injection.

11. Method of manufacturing flexible tube heads according to any one of claims 9 to 10 in which said electronic component is placed on convex conical surface (11) of punch head (10) with the molding device arranged in such a way that punch (10) is under the die (16).

12. Method of manufacturing flexible tube heads according to any one of claims 9 to 11, in which said electronic component (20, 20') has a support (21, 21') comprising an external coat of plastic material compatible in fusion with the plastic material of the head and in which the said electronic component is placed on the convex conical surface (11) of punch head (10) when said external coat is brought up to the said convex conical surface of the punch.

13. Method of manufacturing flexible tube heads according to any of the claims 9 to 12, in which said electronic component (20') has a disc-shaped support pierced at the center, with the disc arranged around the protuberance (14) of the punch used for shaping the inside of the edge.

14. Flexible tube comprising a head and a flexible skirt, **characterized in that** the head is a tube head according to any one of claims 1 to 8.

15. Method of manufacturing a flexible tube having a head (40) and a skirt (30) in which said head is molded over end (31) of the said skirt, with the said skirt tight-fitted around the part of the mold referred to as the punch, pushed home in such a way that one end (31) of the skirt protrudes and is held captive in the molding cavity (17) bordered by punch head (10) and the footprint of die (16), **characterized in that** an electronic module (20), capable of exchanging information without any electrical contact with a reading and/or reading/writing device, typically an electronic component of the RFID type, is placed on head (11) of punch (10), bearing against end (31) of skirt (30) which protrudes into the molding cavity (17).
